(19) Europäisches Patentamt
European Patent Office
Office européen des brevets

(11) **EP 3 115 966 B1**

# (12) EUROPEAN PATENT SPECIFICATION

(45) Date of publication and mention
of the grant of the patent:
**04.03.2020 Bulletin 2020/10**

(51) Int Cl.:
***G06T 7/11*** (2017.01)

(21) Application number: **16177194.4**

(22) Date of filing: **30.06.2016**

(54) **OBJECT DETECTION DEVICE, OBJECT DETECTION METHOD, AND COMPUTER PROGRAM**

OBJEKTERKENNUNGSVORRICHTUNG, OBJEKTERKENNUNGSVERFAHREN UND COMPUTERPROGRAMM

DISPOSITIF DE DÉTECTION D'OBJET, PROCÉDÉ DE DÉTECTION D'OBJET ET PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.07.2015 JP 2015135574**

(43) Date of publication of application:
**11.01.2017 Bulletin 2017/02**

(73) Proprietor: **Ricoh Company, Ltd.
Tokyo 143-8555 (JP)**

(72) Inventor: **YAMADA, Yuu
Tokyo, 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
- **Benjamin Kormann ET AL: "STEREO VISION BASED VEHICLE DETECTION", VISIGRAPP 2010: International Joint Conference on Computer Vision, Imaging and Computer Graphics Theory and Applications, 17 May 2010 (2010-05-17), pages 431-438, XP055156426, Angers, France Retrieved from the Internet: URL:http://ar.in.tum.de/pub/kormann2010vis igrapp/kormann2010visigrapp.pdf [retrieved on 2014-12-03]**
- **TARAK GANDHI ET AL: "Vehicle Surround Capture: Survey of Techniques and a Novel Omni-Video-Based Approach for Dynamic Panoramic Surround Maps", IEEE TRANSACTIONS ON INTELLIGENT TRANSPORTATION SYSTEMS, IEEE, PISCATAWAY, NJ, USA, vol. 7, no. 3, 1 September 2006 (2006-09-01), pages 293-308, XP002659721, ISSN: 1524-9050, DOI: 10.1109/TITS.2006.880635**
- **WEIMING HU ET AL: "Principal Axis-Based Correspondence between Multiple Cameras for People Tracking", IEEE TRANSACTIONS ON PATTERN ANALYSIS AND MACHINE INTELLIGENCE, IEEE COMPUTER SOCIETY, USA, vol. 28, no. 4, 1 April 2006 (2006-04-01), pages 663-671, XP001523374, ISSN: 0162-8828, DOI: 10.1109/TPAMI.2006.80**

**Description**

BACKGROUND OF THE INVENTION

1. Field of the Invention

The present invention relates to an object detection device, an object detection method, and a computer program.

2. Description of the Related Art

In recent years, technologies have been developed for detecting an object, such as person or automobile, at a high speed due to improvements in information processing technologies and image processing technologies. Furthermore, the technologies for object detection are applied to assistance for driving automobiles so that collision avoidance control, such as warning to drivers or automatic braking, is conducted if approaching or collision with persons, vehicles, or the like, is predicted. For example, Japanese Patent Application Laid-open No. 2014-096005 discloses the technology of generating the distance image from a pair of grayscale images, captured by a stereo camera, and detecting the object on the basis of the distance images.

However, according to the conventional technologies, there is a possibility that, if multiple objects are present close to each other, the objects are detected as a single object.

The present invention has been made in consideration of the foregoing, and it has an object to provide an object detection device, an object detection method, and a program that make it possible to improve the accuracy with which an object is detected.

Benjamin Kormann ET AL: "STEREO VISION BASED VEHICLE DETECTION", VISIGRAPP 2010: International Joint Conference on Computer Vision, Imaging and Computer Graphics Theory and Applications, 17 May 2010 (2010-05-07), pages 431-438, XP055156426, Angers, France, Retrieved from the Internet: URL:http:/ar.in.tum.de/pub/korann2010visigrapp/kormann2010visigrapp.pdf [retrieved on 2014-12-03] disclose a method of stereovision based vehicle detection which uses U/V-disparity data derived from a disparity map which allows to divide a cluster of objects in an image into individually recognized objects.

TARAK GANDHI ET AL: "Vehicle Surround Capture: Survey of Techniques and a Novel Omni-Video-Based Approach for Dynamic Panoramic Surround Maps", IEEE TRANSACTIONS ON INTELLIGENT TRANSPORTATION SYSTEMS, IEEE, PISCATAWAY, NJ, USA, vol. 7, no. 3, 1 September 2006 (2006-09-01), pages 293-308, XP002659721, ISSN: 1524-9050, DOI: 10.1109/TITS.2006.880635 disclose a method of front-object detection usable in a vehicle travelling on a road which is modelled as a planar surface. That method encompasses generating a disparity histogram and smoothing the histogram image using Gaussian filtering and morphological closing. Then, the image is thresholded and connected components are found.

WEIMING HU ET AL: "Principal Axis-Based Correspondence between Multiple Camera for People Tracking", IEEE TRANSACTIONS ON PATTERN ANALYSIS AND MACHINE INTELLIGENCE, IEEE COMPUTER SOCIETY, USA, vol. 28, no. 4, 1 April 2006 (2006-04-01), pages 663-671, XP001523374, ISSN: 0162-8828, DOI: 10.1109/TPAMI.2006.80 disclose an image analysis method which allows to track moving objects in a series of images and predict their movement.

SUMMARY OF THE INVENTION

The scope of the invention is defined by the appended claims. Any reference to "embodiment(s)", "example(s)" or "aspect(s) of the invention" in this description not falling under the scope of the claims should be interpreted as illustrative example(s) for understanding the invention.

According to one aspect of the present invention, an object detection device as defined in claim 1 is provided.

The present invention has an advantage such that the accuracy with which an object is detected may be improved.

BRIEF DESCRIPTION OF THE DRAWINGS

FIG. 1 is a schematic diagram that illustrates a schematic configuration of a vehicle control system according to an embodiment;
FIG. 2 is a diagram that illustrates schematic configurations of an image capturing unit and an image analyzing unit that are illustrated in FIG. 1;

FIG. 3 is a diagram that illustrates an example of the functional configuration of the image analyzing unit;

FIG. 4 is a diagram that schematically illustrates an example of the reference image;

FIG. 5 is a diagram that schematically illustrates the disparity image that corresponds to the reference image of FIG. 4;

FIG. 6 is a diagram that schematically illustrates the first U map that corresponds to the disparity image of FIG. 5;

FIG. 7 is a diagram that schematically illustrates the second U map that corresponds to the first U map of FIG. 6;

FIG. 8 is a diagram that illustrates an operation of an isolated-area detecting unit;

FIG. 9 is a diagram that illustrates an operation of the isolated-area detecting unit;

FIG. 10 is a diagram that schematically illustrates another example of the reference image;

FIG. 11 is a diagram that schematically illustrates the second U map that corresponds to the reference image of FIG. 10;

FIG. 12 is an enlarged view of a pixel group that is illustrated in FIG. 11;

FIG. 13 is a diagram that illustrates an example of the configuration of a division processing unit;

FIG. 14 is a flowchart that illustrates the flow of a process that is performed by the division processing unit;

FIG. 15 is a diagram that schematically illustrates an example of the histogram;

FIG. 16 is a flowchart that illustrates the flow of the process that is performed by a histogram dividing unit;

FIG. 17 is a diagram that schematically illustrates another example of the histogram;

FIG. 18 is a diagram that illustrates an example of an isolated area that has been divided by the division processing unit;

FIG. 19 is a diagram that illustrates an operation of a corresponding-area detecting unit;

FIG. 20 is a diagram that schematically illustrates another example of the reference image;

FIG. 21 is a diagram that schematically illustrates the second U map that corresponds to the reference image of FIG. 20;

FIG. 22 is an enlarged view of a pixel group that is illustrated in FIG. 21;

FIG. 23 is a diagram that illustrates a functional configuration of a division processing unit according to a modified example 1;

FIG. 24 is a diagram that illustrates an operation of an image converting unit;

FIG. 25 is a diagram that illustrates an example of the isolated area that has been converted by the image converting unit;

FIG. 26 is a diagram that illustrates a functional configuration of a division processing unit according to a modified example 2; and

FIG. 27 is a diagram that illustrates a functional configuration of a division processing unit according to a modified example 3.

The accompanying drawings are intended to depict exemplary embodiments of the present invention and should not be interpreted to limit the scope thereof. Identical or similar reference numerals designate identical or similar components throughout the various drawings.

DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of the present invention will be described in detail below with reference to the drawings,

With reference to the attached drawings, a detailed explanation is given below of an embodiment of the present invention. Furthermore, in the present embodiment, an explanation is given of a case where the object detection device, the object detection method, and the program according to the present invention are applied to part of the collision avoidance function of automobiles; however, this is not a limitation on devices and targets to which they are applied.

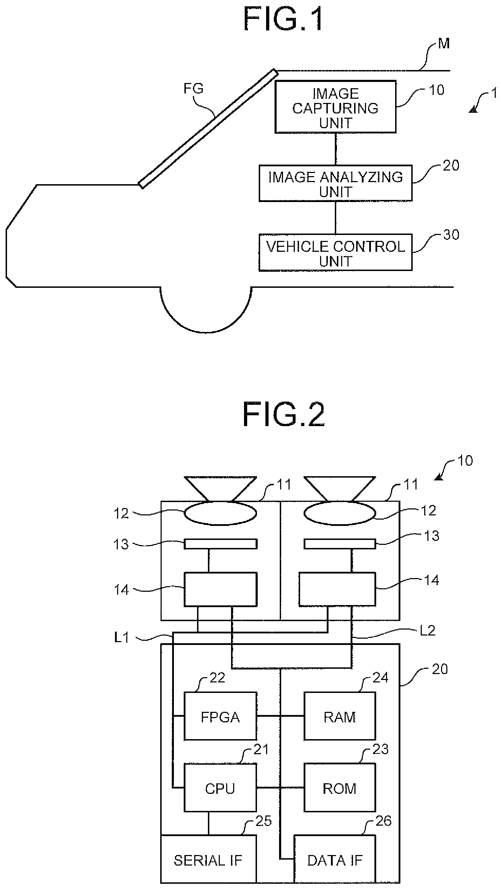

FIG. 1 is a schematic diagram that illustrates a schematic configuration of a vehicle control system according to the present embodiment. A vehicle control system 1 is installed in a subject vehicle M, such as an automobile, which is a movable body, and it includes an image capturing unit 10, an image analyzing unit 20, and a vehicle control unit 30.

The image capturing unit 10 captures images where the front area of the subject vehicle M is a captured area. The image capturing unit 10 is provided, for example, near the rearview mirror (not illustrated) on a front windshield FG of the subject vehicle M. The image data that is acquired during capturing of the image capturing unit 10 is input to the image analyzing unit 20. The image analyzing unit 20 analyzes the image data, transmitted from the image capturing unit 10, to detect an object, such as a person or a different vehicle, which is located in front of the subject vehicle M. Detection results of the image analyzing unit 20 are output to the vehicle control unit 30.

The vehicle control unit 30 performs a control to support driving of the subject vehicle M on the basis of the vehicle information that is obtained from various sensors (not illustrated) that are provided in the subject vehicle M. The vehicle information includes, for example, vehicle speed, acceleration, rudder angle, or yaw rate. Furthermore, the vehicle control unit 30 performs a control to avoid collision in accordance with a detection result, transmitted from the image analyzing unit 20. Such a control includes, for example, alert warning to warn that an object is approaching to the driver of the subject vehicle M, automatic brake control, or the like.

FIG. 2 is a schematic diagram that illustrates schematic configurations of the image capturing unit 10 and the image analyzing unit 20. The image capturing unit 10 is a stereo camera, and it includes two cameras 11 that are arranged in a horizontal direction (right and left direction). Each of the cameras 11 includes a lens 12, an image sensor 13, and an image-sensor control unit 14.

The image sensor 13 is an image sensor, such as a CCD or a CMOS. The image sensor 13 sequentially acquires the image, which is focused by the lens 12, as image data. The image-sensor control unit 14 controls an operation of the image sensor 13 on the basis of various types of command data, such as exposure control value, input from the image analyzing unit 20 (a CPU 21, an FPGA 22) via a serial bus L1. Furthermore, the image-sensor control unit 14 transfers the image data, acquired by the image sensor 13, to a RAM 24 of the image analyzing unit 20 via a data bus L2. Thus, the RAM 24 of the image analyzing unit 20 sequentially stores a pair of right and left image data, including disparity information.

Furthermore, the image analyzing unit 20 at the subsequent stage analyzes images on the basis of the brightness signal that is included in image data. Therefore, each of the cameras 11 may be configured to output the brightness signal as image data to the image analyzing unit 20. Furthermore, if the image sensor 13 is a color image sensor, a configuration may be such that, for example, the image-sensor control unit 14 acquires a brightness signal (Y) from an RGB signal in accordance with the following Conversion Equation (10) so as to output the brightness signal to the image analyzing unit 20. Hereafter, the image data that is made up of brightness signals is referred to as the brightness image.

$$Y = 0.3R + 0.59G + 0.11B \tag{10}$$

The image analyzing unit 20 includes the CPU 21, the FPGA 22, a ROM 23, the RAM 24, a serial IF 25, a data IF 26, or the like. The CPU 21 controls an operation of the image analyzing unit 20 in an integrated manner. The FPGA 22 performs a predetermined operation on the image data that is stored in the RAM 24. For example, the FPGA 22 performs image processing that requires real-time performances, such as gamma correction or distortion correction (parallelization of right and left images), or generation of disparity images, which is described later. Furthermore, a configuration may be such that, if color image data is input from the image capturing unit 10, the FPGA 22 acquires a brightness signal (brightness image) from an RGB signal in accordance with Conversion Equation (10).

The ROM 23 stores various programs and setting data that are executable by the CPU 21. For example, the ROM 23 stores an object-type table, or the like, which is described later. The RAM 24 serves as a work area. For example, the RAM 24 temporarily stores various types of image data (brightness image, disparity image, or the like) or a first U map (which is equivalent to a first map) and a second U map (which is equivalent to a second map) that are described later.

The serial IF 25 and the data IF 26 control data transactions between the vehicle control unit 30 (see FIG. 1) and the CPU 21. The CPU 21 acquires the vehicle information on the subject vehicle M from the vehicle control unit 30 via the data IF 26. Furthermore, the CPU 21 outputs various types of detection data, obtained from the image data, to the vehicle control unit 30 via the serial IF 25 and the data IF 26.

Next, an explanation is given of the configuration of the function that is provided by the image analyzing unit 20. According to the present embodiment, the image analyzing unit 20 serves as an object detection device.

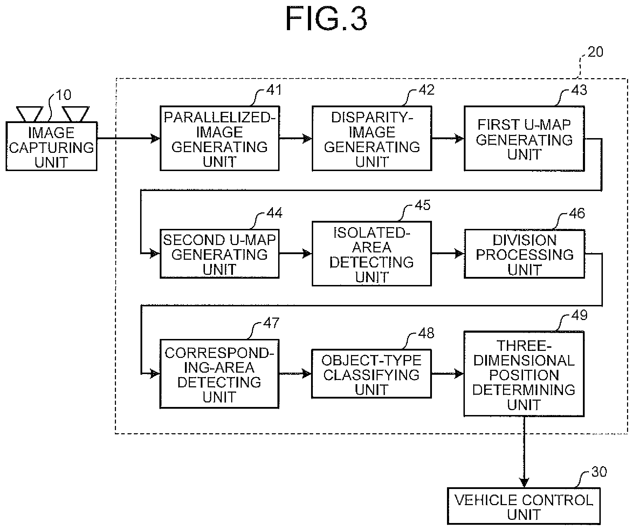

FIG. 3 is a diagram that illustrates an example of the functional configuration of the image analyzing unit 20. As illustrated in FIG. 3, the image analyzing unit 20 includes a parallelized-image generating unit 41, a disparity-image generating unit 42, a first U-map generating unit 43, a second U-map generating unit 44, an isolated-area detecting unit 45, a division processing unit 46, a corresponding-area detecting unit 47, an object-type classifying unit 48, a three-dimensional position determining unit 49, or the like. Furthermore, each functional unit of the image analyzing unit 20 may be a software configuration that is implemented in cooperation with the programs, stored in the CPU 21 and the ROM 23. Furthermore, each functional unit of the image analyzing unit 20 may be a hardware configuration that is implemented by the FPGA 22, a dedicated hardware, or the like.

The parallelized-image generating unit 41 performs parallelization processing on each pair of right and left image data (brightness image) that is input from the image capturing unit 10. During the parallelization processing, a pair of right and left brightness images, output from the cameras 11, are converted into parallelized stereo images on the basis of distortion of the optical system in the cameras 11 on the right and left and the relative positional relationship. Here, parallelized stereo images mean ideal stereo images that may be obtained if two pinhole cameras are arranged parallel to each other.

Here, the way of parallelization processing is not particularly specified, and conventional technologies may be used. For example, the parallelized-image generating unit 41 calculates the degree of distortion of each pixel by using the polynomial, that is, $\Delta x = f(x, y)$, $\Delta y = g(x, y)$. Then, the parallelized-image generating unit 41 uses a result of the calculation to conduct conversion on each pixel of the brightness image, output from each of the cameras 11, thereby generating a parallelized stereo image. The polynomial is based on, for example, a fifth order polynomial with regard to x (the position of an image in a horizontal direction) and y (the position of an image in a vertical direction).

The disparity-image generating unit 42 detects a right-and-left disparity value from the pair of brightness images on which parallelization processing has been performed. Here, the disparity value represents the degree of misalignment of an image area in the comparison image relative to an image area in the reference image, corresponding to the same point in the captured area, where one of the brightness images is the reference image and the other one of them is the comparison image.

For example, the disparity-image generating unit 42 defines a block that includes a plurality of pixels (e.g., 16 pixels×1 pixel) around the pixel of interest with regard to a certain row in the reference image. Furthermore, in the same row of the comparison image, the disparity-image generating unit 42 shifts the block that has the same size as that of the defined block in the reference image in the direction of the horizontal line on a pixel by pixel basis. Furthermore, the disparity-image generating unit 42 calculates the correlation value that indicates the correlation between the feature value that indicates the characteristics of the pixel value of the block, defined in the reference image, and the feature value that indicates the characteristics of the pixel value of each block in the comparison image. Then, the disparity-image generating unit 42 performs a matching operation to select the block in the comparison image, which is most correlated to the block in the reference image among the blocks in the comparison image, on the basis of the calculated correlation values. Afterward, the disparity-image generating unit 42 calculates a disparity value d, which is the degree of misalignment between the pixel of interest in the block of the reference image and the corresponding pixel in the block of the comparison image, selected during the matching operation. The disparity-image generating unit 42 performs the above-described operation to calculate the disparity value d on the entire area or a specific area of the reference image.

As the feature value of a block, used for the matching operation, for example, the value (brightness value) of each pixel in a block may be used. Furthermore, as the correlation value, it is possible to use, for example, the sum of the absolute value of the difference between the value (brightness value) of each pixel of a block in the reference image and the value (brightness value) of the corresponding pixel of a block in the comparison image. In this case, the block with the smallest sum value has high correlativity.

The method for the matching operation is not particularly specified. For example, it is possible to use a method, such as Sum of Squared Difference (SSD), Zero-mean Sum of Squared Difference (ZSSD), Sum of Absolute Difference (SAD), or Zero-mean Sum of Absolute Difference (ZSAD). Furthermore, as the disparity value may be calculated only on a pixel by pixel basis during the matching operation, if the disparity value on the level of a sub pixel, which is less than 1 pixel, is needed, an estimated value needs to be used. As the estimation method for estimating a disparity value on a sub-pixel level, for example, it is possible to use an equiangular linear method, a quadratic curve method, or the like. Moreover, as an estimated disparity value on a sub-pixel level has an error, estimation error correction (EEC), or the like, may be used to reduce the estimation error.

Furthermore, the disparity-image generating unit 42 generates disparity images that represent the disparity value, detected with regard to each image area (pixel) in the reference image, as the pixel value of each image area. Here, the pixel location of each pixel, included in a disparity image, is represented by using the point (u, v). Here, u is the abscissa, and v is the ordinate. Furthermore, the pixel value of the pixel at the point (u, v) is represented by using $d(u, v)$, and it indicates the disparity value (disparity information) at the point (u, v). Here, conventional technologies may be used as the method for generating disparity images.

The first U-map generating unit 43 uses the disparity image, generated by the disparity-image generating unit 42, to generate the first U map that relates a pixel location in the direction of one axis of a disparity image, the disparity value at the pixel location, and the disparity frequency at which the disparity value appears. Specifically, the first U-map generating unit 43 sets a u-direction location in a disparity image, the disparity value d, and the disparity frequency in each axial direction in three dimensions, thereby generating a two-dimensional histogram. The two-dimensional histogram is referred to as the first U map. Here, the first U map is equivalent to data that is typically called U-Disparity map.

The second U-map generating unit 44 generates the second U map by converting the axis u of the first U map from a unit of pixel of a disparity image into a unit of the actual distance. The method of converting a unit of pixel into a unit of the actual distance is not particularly specified.

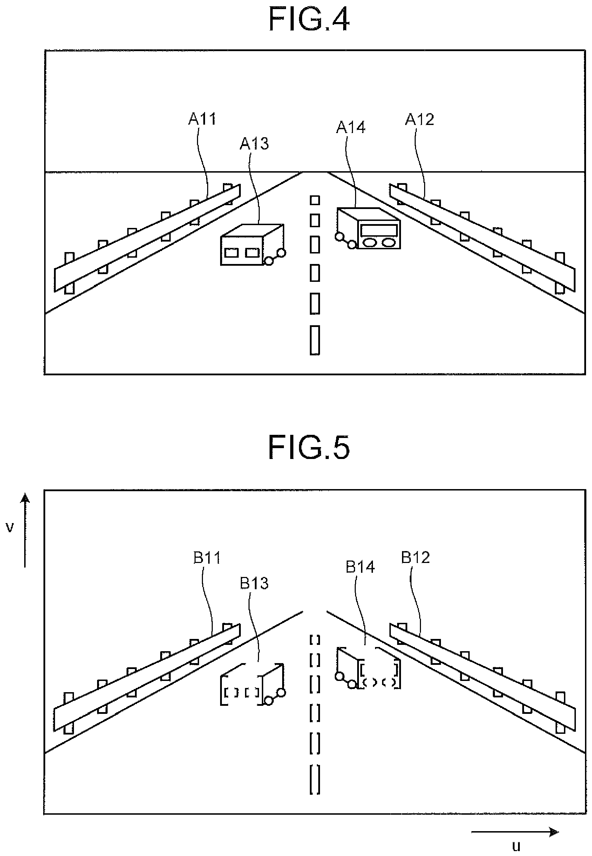

Here, with reference to FIGS. 4 to 7, an explanation is given of the disparity image, the first U map, and the second U map. FIG. 4 is a diagram that schematically illustrates an example of the reference image (brightness image). FIG. 5 is a diagram that schematically illustrates the disparity image that corresponds to the reference image of FIG. 4.

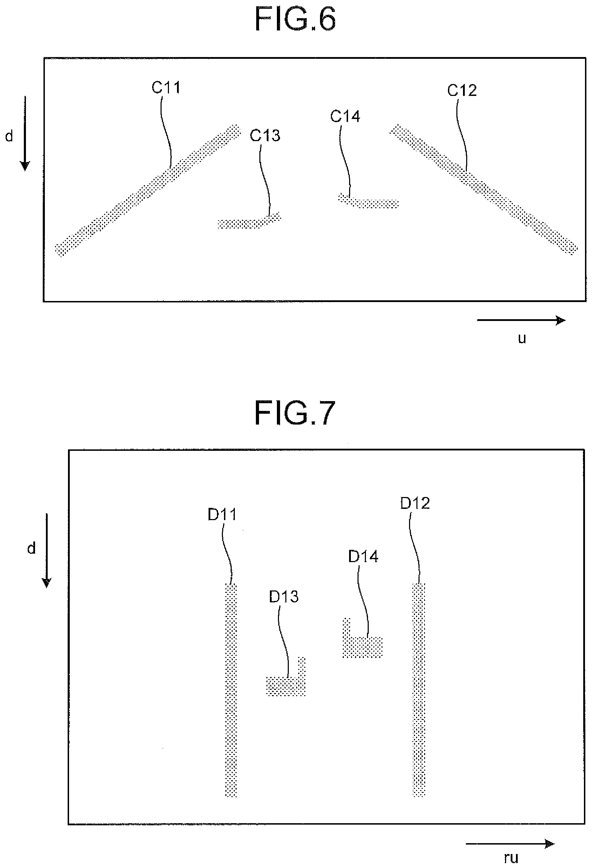

In the disparity image, the horizontal axis of the reference image corresponds to the u-direction location, and the vertical axis of the reference image corresponds to the v-direction location. FIG. 6 is a diagram that schematically illustrates the first U map that corresponds to the disparity image of FIG. 5. In the first U map, the horizontal axis corresponds to the u-direction location of the disparity image, and the vertical axis corresponds to the disparity value d. Furthermore, FIG. 7 is a diagram that schematically illustrates the second U map that corresponds to the first U map of FIG. 6. In the second U map, the horizontal axis corresponds to a location ru that is obtained by converting the u-direction location in the disparity image into the actual distance, and the vertical axis corresponds to the disparity value d. Here, with the vertical axis of FIGS. 6 and 7, the disparity value d becomes larger as it is in a lower section.

In the example of the image that is illustrated in FIG. 4, there are guardrails A11 and A12 on the right and left sides of the road surface. Furthermore, there are a leading vehicle A13 and an oncoming vehicle A14, one for each, as different vehicles between the guardrails A11 and A12. Furthermore, the disparity image, illustrated in FIG. 5, is obtained in accordance with the relationship between the reference image of FIG. 4 and an undepicted comparison image. In this disparity image, a pixel group B11 and a pixel group B12 correspond to the guardrails A11 and A12 in the reference image. Furthermore, a pixel group B13 corresponds to the leading vehicle A13 in the reference image, and a pixel group B14 corresponds to the oncoming vehicle A14 in the reference image. Furthermore, in the disparity image, the disparity value d is represented as a pixel value.

Furthermore, in the first U map, as illustrated in FIG. 6, pixel groups C11 and C12 with a high frequency, which correspond to the guardrails A11 and A12 (the pixel groups B11 and B12), are distributed in substantially a straight line that extends toward the center from both ends on the right and left. Furthermore, pixel groups C13 and C14 with a high frequency, which correspond to the leading vehicle A13 (the pixel group B13) and the oncoming vehicle A14 (the pixel group B14), are distributed between the pixel group C11 and the pixel group C12 in the state of a line segment that extends parallel to substantially the direction of the axis u. Moreover, in a case where, other than the back area of the leading vehicle A13 or the front area of the oncoming vehicle A14, the side areas of these vehicles appear, disparity occurs in the same image area where the different vehicle appears. In this case, as illustrated in FIG. 6, the pixel group with a high frequency, which corresponds to the different vehicle, indicates a distribution in a state where the line segment that extends in substantially the direction of the axis u is connected to the line segment that is tilted with respect to substantially the direction of the axis u.

Furthermore, the second U map, which is generated from the first U map of FIG. 6, is represented as in FIG. 7. In the illustrated example of the second U map, a unit called a thinned disparity, which is thinning of the disparity value d in accordance with the distance from the object, is used in the vertical axis. Here, it is preferable that the thinning amount of the disparity value d is set to be larger as the object is located at a shorter distance. As the object appears large if it is at a short distance, the disparity information (the number of the disparity values d) is large, and the distance resolution is high; therefore, thinning may be conducted by a large amount.

In the second U map of FIG. 7, pixel groups D11 and D12 with a high frequency, which correspond to the guardrails A11 and A12 (the pixel groups C11 and C12), are distributed in substantially a straight line that extends vertically at both ends on the right and left. Furthermore, pixel groups D13 and D14 with a high frequency, which correspond to the leading vehicle A13 (the pixel group C13) and the oncoming vehicle A14 (the pixel group C14), are distributed between the pixel group D11 and the pixel group D12 in the state of the line segment that has a shape of substantially an L letter. Here, out of the line segment that is formed like substantially an L letter, the line segment in the direction of the axis ru corresponds to the back area of the leading vehicle A13 or the front area of the oncoming vehicle A14. Furthermore, out of the line segment that is formed like substantially an L letter, the line segments in the direction of the axis d correspond to the side areas of the leading vehicle A13 and the oncoming vehicle A14.

With reference back to FIG. 3, the isolated-area detecting unit 45 detects, from the second U map, that an area with a higher disparity frequency than the surroundings is an isolated area. Specifically, the isolated-area detecting unit 45 determines whether, with respect to a single pixel (hereafter, referred to as the effective pixel) whose disparity frequency is equal to or more than a predetermined value (threshold), there is a different effective pixel in the neighboring 8 pixels around the effective pixel. Here, the threshold for determining whether it is an effective pixel is not particularly specified; however, it is preferable to use the value that enables appropriate detection of an isolated area in accordance with a detection result of an isolated area, or the like. For example, a configuration may be such that the threshold is changed in accordance with conditions, such as the environment of a captured area, or a measurement mode for measuring the object. Here, the effective pixel corresponds to each pixel that is included in the pixel group D13, illustrated in FIG. 7, or the like.

If there is a different effective pixel in the 8 neighboring pixels, the isolated-area detecting unit 45 determines that it is a pixel group where the center effective pixel is connected to the different effective pixel. Furthermore, the isolated-area detecting unit 45 performs the above-described operation on each effective pixel in the second U map, thereby grouping the effective pixels into one or more pixel groups. Then, the isolated-area detecting unit 45 detects that each rectangular area that circumscribes each pixel group is an isolated area.

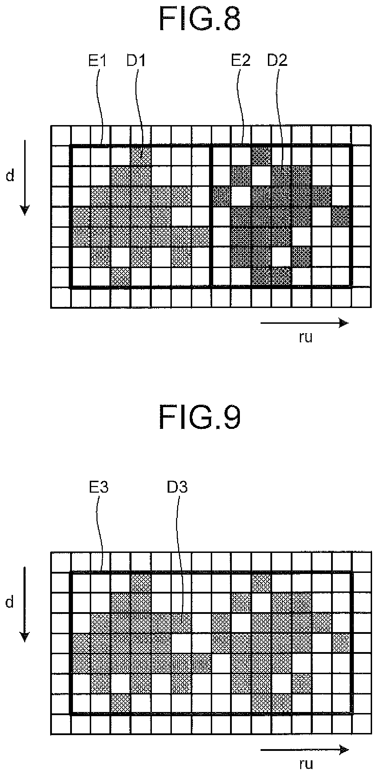

Here, with reference to FIGS. 8 and 9, an explanation is given of an operation of the isolated-area detecting unit 45. FIGS. 8 and 9 are diagrams that illustrate an operation of the isolated-area detecting unit 45, and each pixel, represented in color, indicates an effective pixel on the second U map.

For example, in the case of FIG. 8, the isolated-area detecting unit 45 groups multiple effective pixels into a pixel group D1 and a pixel group D2 in accordance with the above-described rule of the 8 neighboring pixels. Then, the isolated-area detecting unit 45 detects that rectangular areas, which circumscribe the pixel groups D1 and D2, are isolated areas E1 and E2. Furthermore, in the case of FIG. 9, in accordance with the above-described rule of the 8 neighboring pixels, the isolated-area detecting unit 45 groups multiple effective pixels into a single pixel group D3. Then, the isolated-area detecting unit 45 detects that the rectangular area that circumscribes the pixel group D3 is an isolated area E3.

Furthermore, before an isolated area is detected, the isolated-area detecting unit 45 may perform an operation to remove noise that is included in the second U map or to facilitate detection of isolated areas. For example, the isolated-area detecting unit 45 may use a smoothing filter, or the like, to perform an operation to smooth the second U map. Furthermore, the isolated-area detecting unit 45 may perform binarization processing on the second U map on the basis of the value of a threshold. Moreover, a configuration may be such that, if a pixel group after grouping has a size (width, height, number of pixels, or the like) that is equal to or less than a predetermined value, it is removed from the detection targets.

Furthermore, if there are multiple objects which are present side by side in the captured area, they are sometimes represented in a state such that the pixel groups (effective pixels), which correspond to the objects, are connected, as illustrated in FIG. 9.

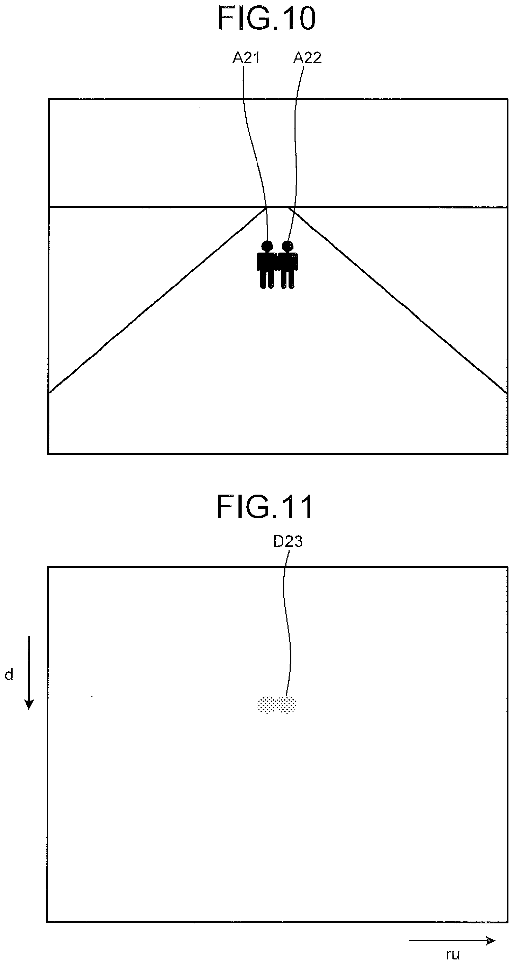

For example, as illustrated in FIG. 10, from the reference image that is captured in a state where persons A21 and A22 are side-by-side on the center of the road, it is possible to obtain the second U map that indicates a pixel group D23 that corresponds to the persons A21 and A22, as illustrated in FIG. 11. Here, FIG. 10 is a diagram that schematically illustrates another example of the reference image. Furthermore, FIG. 11 is a diagram that schematically illustrates the second U map that corresponds to the reference image of FIG. 10.

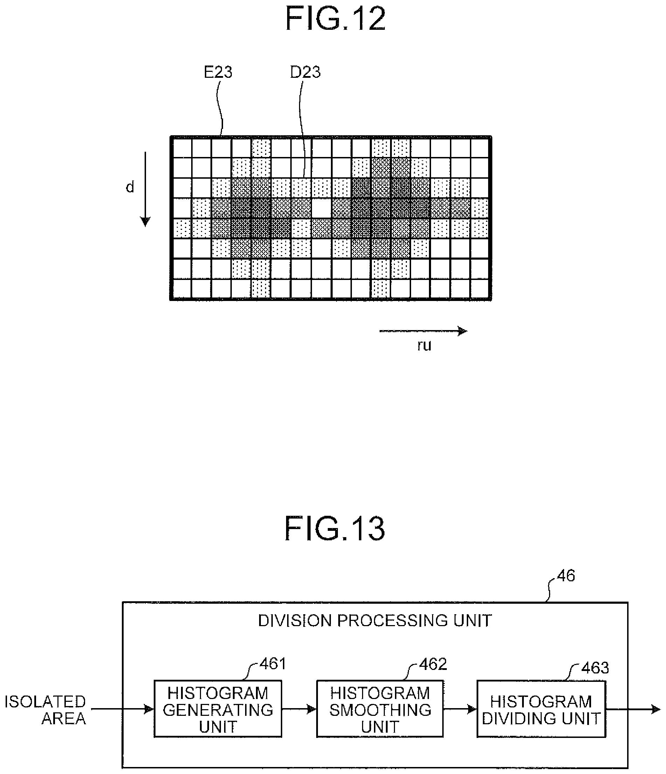

As the person A21 and the person A22 are close to each other side by side in FIG. 10, the effective pixels that correspond to the persons A21 and A22 on the second U map are represented as the single pixel group D23. In this case, as illustrated in FIG. 12, the isolated-area detecting unit 45 groups the pixel group D23 as a single pixel group. Furthermore, the isolated-area detecting unit 45 detects that the rectangular area that circumscribes the pixel group D23 is an isolated area E23. Here, FIG. 12 is an enlarged view of the area of the pixel group D23 that is illustrated in FIG. 11, and a higher pixel density indicates a higher disparity frequency.

As described above, if multiple objects are present adjacent to each other, there is a possibility that it is difficult for the isolated-area detecting unit 45 to detect the isolated area of the individual object. Furthermore, if it is difficult to detect the isolated area of the individual object, the isolated area is estimated larger; therefore, it is difficult to specify the original size of the object, and the accuracy with which the object is identified is decreased.

Therefore, the division processing unit 46 according to the present embodiment performs an operation to divide the single isolated area, which is formed of the pixel group of multiple objects, into an isolated area of each object. An explanation is given below of the division processing unit 46.

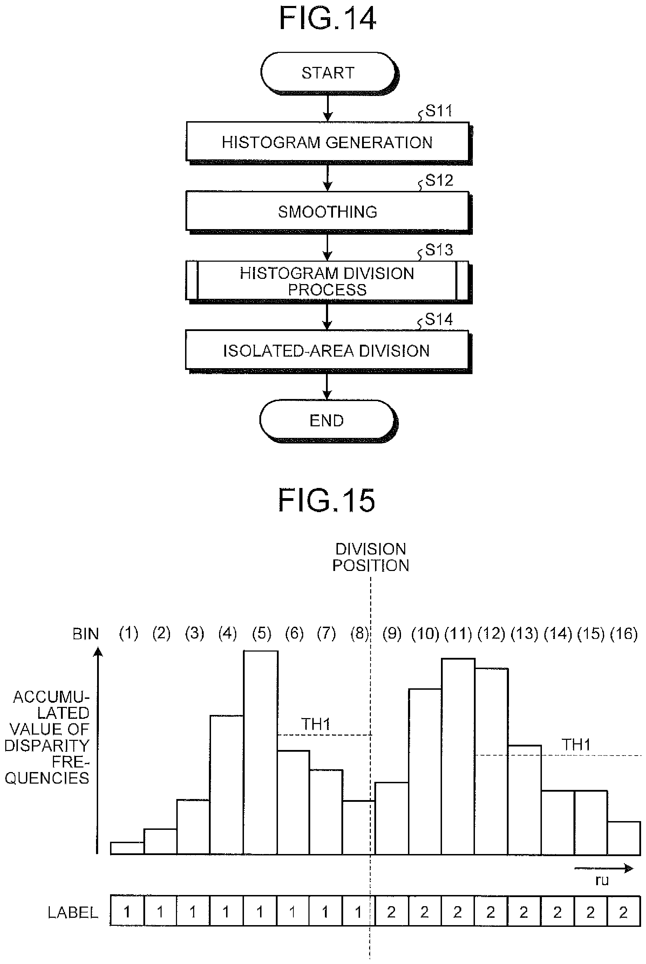

FIG. 13 is a diagram that illustrates an example of the configuration of the division processing unit 46. As illustrated in FIG. 13, the division processing unit 46 includes functional units, such as a histogram generating unit 461, a histogram smoothing unit 462, or a histogram dividing unit 463. Furthermore, the division processing unit 46 performs the operation that is illustrated in FIG. 14 in cooperation with each functional unit, thereby dividing the isolated area, detected by the isolated-area detecting unit 45, into the isolated area of each object. Here, FIG. 14 is a flowchart that illustrates the flow of a process that is performed by the division processing unit 46.

First, the histogram generating unit 461 generates the histogram that indicates the distribution of the disparity frequency as the disparity-frequency distribution information for each isolated area that is detected by the division processing unit 46 (Step S11). Specifically, the histogram generating unit 461 uses the disparity frequency of each pixel (effective pixel), included in the isolated area, to generate a histogram where each location (ru) of the isolated area in the direction of the horizontal axis is a bin. Here, the method for generating a histogram is not particularly specified. For example, the histogram generating unit 461 accumulates the disparity frequencies in the direction of the vertical axis (the axis d) of the isolated area, thereby generating a histogram where each of the locations ru is a bin. Furthermore, according to a different generation method, the histogram generating unit 461 obtains the median value of the disparity frequency with regard to the direction of the vertical axis (the axis d) of an isolated area, thereby generating a histogram where each of the locations ru is a bin. Furthermore, the present embodiment uses the former generation method in which the disparity frequencies are accumulated.

The histogram smoothing unit 462 performs an operation to smooth the histogram that is generated by the histogram generating unit 461 (Step S12). Here, a conventional technology is used for smoothing. Furthermore, a configuration may be such that the histogram smoothing unit 462 conducts smoothing on the entire histogram at one time. Moreover, a configuration may be such that, each time the bin, which is a processing target, is selected during the histogram division process that is described later, the processing target bin is smoothed on the basis of the disparity frequency of the surrounding bin.

For example, if a histogram is generated for the isolated area E23 that is illustrated in FIG. 12, the result is obtained as illustrated in FIG. 15. FIG. 15 is a diagram that illustrates an example of the histogram, and it indicates a state where smoothing has been conducted by the histogram smoothing unit 462. Furthermore, the horizontal axis corresponds to the location (ru) of the isolated area in the direction of the horizontal axis, and the vertical axis corresponds to the accumulated value of the disparity frequencies.

With reference back to FIG. 14, the histogram dividing unit 463 performs an operation to divide an isolated area with regard to the histogram that has been smoothed by the histogram smoothing unit 462 (Step S13). An explanation is given below of an operation that is performed by the histogram dividing unit 463 at Step S13.

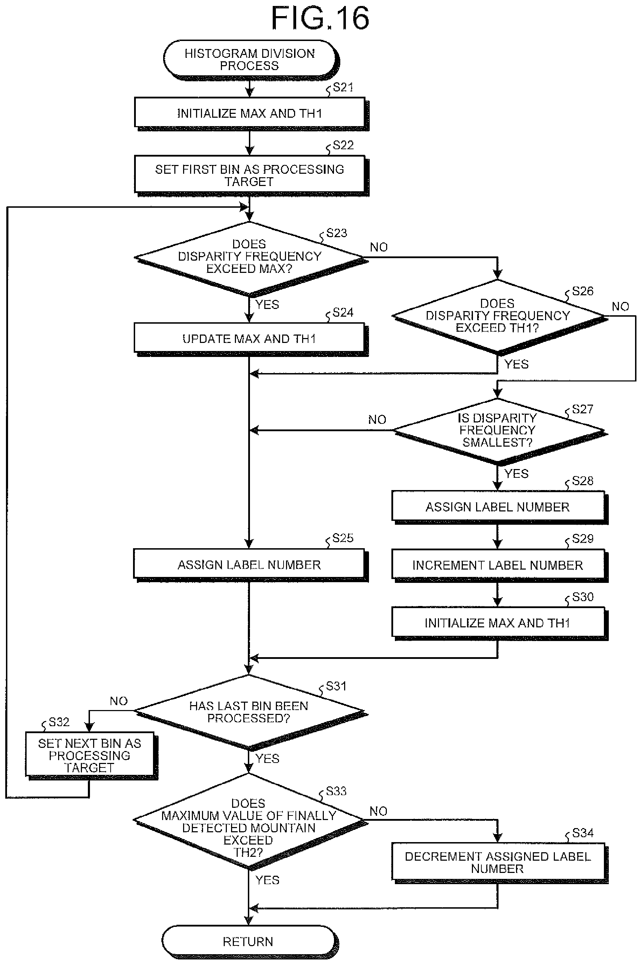

FIG. 16 is a flowchart that illustrates the flow of the process that is performed by the histogram dividing unit 463. First, the histogram dividing unit 463 initializes the values of a maximum value MAX and a first threshold TH1, which are the index values for dividing the histogram, to 0 (Step S21). Next, the histogram dividing unit 463 sets the bin (histogram) with the smallest location ru as the first processing target (Step S22).

Next, the histogram dividing unit 463 determines whether the disparity frequency (accumulated value) of the bin, which is a processing target, exceeds the maximum value MAX (Step S23). If the disparity frequency exceeds the maximum value MAX (Step S23; Yes), the histogram dividing unit 463 updates the maximum value MAX and the first threshold TH1 on the basis of the disparity frequency (Step S24). Specifically, the histogram dividing unit 463 updates the maximum value MAX to the value of the disparity frequency. Furthermore, the histogram dividing unit 463 multiplies the updated maximum value MAX by a predetermined rate $\alpha$, thereby calculating the new first threshold TH1.

Here, the value of the rate $\alpha$ is not particularly specified, and any value, e.g., 0.8, may be set. Furthermore, with regard to the value of the rate $\alpha$, it is preferable to use the value that enables appropriate division in accordance with a division result of isolated areas, or the like. Moreover, a configuration may be such that the value of the rate $\alpha$ is changed in accordance with the environment of the captured area or various conditions.

Next, the histogram dividing unit 463 assigns the label number to the processing target bin (Step S25) and proceeds to Step S31. Here, the assigned label number is for example "1", and the same label number is assigned until it is incremented at Step S31 that is described later (the same holds for Step S28).

Conversely, at Step S23, if it is determined that the disparity frequency is equal to or less than the maximum value MAX (Step S23; No), the histogram dividing unit 463 determines whether the disparity frequency exceeds the first threshold TH1 (Step S26). If the disparity frequency exceeds the first threshold TH1 (Step S26; Yes), the histogram dividing unit 463 proceeds to Step S25 so as to assign the label number. Furthermore, if the disparity frequency is equal to or less than the first threshold TH1 (Step S26; No), the histogram dividing unit 463 compares it with the disparity frequency of the different bin that is adjacent to the processing target bin so as to determine whether the disparity frequency of the processing target bin is smallest (Step S27).

At Step S27, if the disparity frequency is not smallest (Step S27; No), the histogram dividing unit 463 proceeds to Step S25 so as to assign the label number. Furthermore, if the disparity frequency is smallest (Step S27; Yes), the histogram dividing unit 463 assigns the label number to the processing target bin (Step S28) and then increments the label number (Step S29). Next, the histogram dividing unit 463 initializes the values of the maximum value MAX and the first threshold TH1 to 0 (Step S30) and proceeds to Step S31.

Next, at Step S31, the histogram dividing unit 463 determines whether the last bin has been processed (Step S31). If there is an unprocessed bin (Step S31; No), the histogram dividing unit 463 sets the next bin as a processing target (Step S32) and then returns to Step S23. Furthermore, if the last bin has been processed (Step S31; Yes), the histogram dividing unit 463 proceeds to the next Step S33.

Here, with reference to the histogram of FIG. 15, the operations at Steps S21 to S31 are explained. Here, in FIG. 15, an explanation is given by using the bin on the extreme left as the bin at the smallest location ru; however, due to the installation position of an isolated area on the second U map, or the like, the bin on the extreme right may be the bin at the smallest location ru.

The histogram dividing unit 463 sequentially performs the operations at Steps S21 to S31, starting from the bin (1) on the extreme left to the bin (16) on the extreme right. Here, as the disparity frequency increases from the bin (1) to the bin (5), the histogram dividing unit 463 sequentially updates the maximum value MAX and the first threshold TH1. Furthermore, as the disparity frequency reaches the peak at the bin (5), the histogram dividing unit 463 stops updating the maximum value MAX and the first threshold TH1 after the bin (5). Then, the histogram dividing unit 463 sequentially assigns the same label number "1" to the bin (1) to the bin (8) until it detects the minimum value (trough) of the disparity frequency at the bin (8).

Next, the histogram dividing unit 463 increments the label number to "2" and initializes the maximum value MAX and the first threshold TH1. As the disparity frequency increases from the subsequent bin (9) to the bin (11), the histogram dividing unit 463 sequentially updates the maximum value MAX and the first threshold TH1. Furthermore, as the disparity frequency reaches the peak at the bin (11), the histogram dividing unit 463 stops updating the maximum value MAX and the first threshold TH1 after the bin (11). Then, the histogram dividing unit 463 sequentially assigns the same label number "2" to the bin (9) to the last bin (16) until it detects the minimum value (trough) of the disparity frequency at the bin (16).

The group of bins, to which the same label number is assigned during the above-described operations, forms the mountain in the histogram. For example, in the histogram of FIG. 15, the histogram dividing unit 463 detects the mountain of the bin (1) to the bin (8) and the mountain of the bin (9) to the bin (16).

With reference back to FIG. 16, at the next Step S33, the histogram dividing unit 463 determines whether the maximum value of the finally detected mountain (histogram) exceeds a predetermined second threshold TH2 (Step S33). If it is determined that it exceeds the second threshold TH2 (Step S33; Yes), the histogram dividing unit 463 terminates this operation and proceeds to Step S14 in FIG. 14. Furthermore, if it is determined that it is equal to or less than the second threshold TH2 (Step S33; No), the histogram dividing unit 463 decrements the label number that is assigned to each bin of the last mountain (Step S34) and proceeds to Step S14 in FIG. 14.

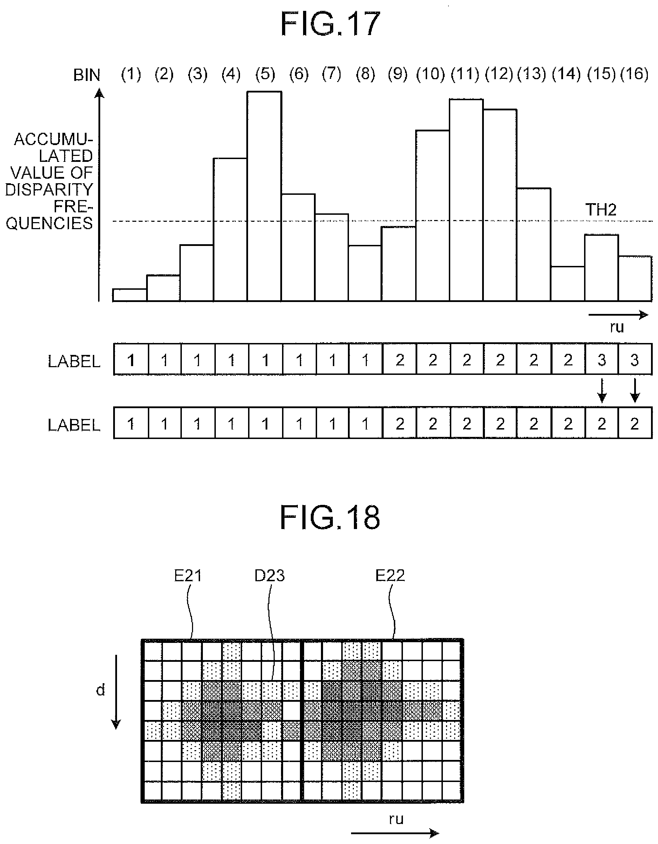

Here, with reference to FIG. 17, an explanation is given of the operations at Steps S33 and S34. FIG. 17 is a diagram that illustrates another example of the histogram. As illustrated in FIG. 17, a small-sized mountain (the bins (15) and (16)) sometimes appear immediately after the smallest value (the bin (14)) of the disparity frequency appears. In this case, during the above-described operations at Steps S21 to S31, the histogram dividing unit 463 assigns the label number "3", which is different from those of the other groups, to the bin (15) and the bin (16).

However, in the case of the histogram in FIG. 17, it is appropriate to consider that the group to which the label number "3" is assigned is not an independent group but it is part of the previous group to which the label number "2" is assigned. Therefore, if the maximum value (peak value) of the mountain of the last group is equal to or less than the second threshold TH2, the histogram dividing unit 463 reassigns the label number that is assigned to the previous group, thereby correcting a grouping error. Thus, it is possible to prevent an isolated area from being improperly divided, and the size of an isolated area may be estimated more correctly.

Furthermore, the value of the second threshold TH2 is not particularly specified. For example, the second threshold TH2 may be a fixed value, or it may be calculated by multiplying the maximum value MAX of the previous group by a predetermined rate $\beta$ (here, $\alpha > \beta$). Furthermore, with regard to the values of the second threshold TH2 and the rate $\beta$, it is preferable to use the value that enables appropriate division in accordance with a division result of an isolated area, or the like. Furthermore, a configuration may be such that the values of the second threshold TH2 and the rate $\beta$ are changed in accordance with the environment of a captured area or various conditions. Furthermore, according to the present embodiment, a configuration is such that the operations at Steps S33 and S34 are performed on the last group; however, this is not a limitation, and a configuration may be such that, each time a new group (a mountain of the histogram) is detected, the operation is performed on the group.

With reference back to FIG. 14, the division processing unit 46 performs an operation to divide an isolated area on the basis of the label number that is assigned to the histogram in each isolated area at Step S13 (Step S14). For example, the isolated area E23 of FIG. 12 is divided into two isolated areas E21 and E22 whose division position is between the bins (8) and (9), as illustrated in FIG. 18, on the basis of the label numbers that are assigned to the histogram of FIG. 15. Here, if the same label number is assigned to the entire histogram (the bins) of the isolated area, it is not the target for division.

Here, the width (the length in the direction of the axis U on the second U map) of an isolated area is equivalent to the width of an object that is represented by the isolated area. Furthermore, the height of a rectangular area is equivalent to the depth of the object that is represented by the isolated area. However, the height of an object is not certain at this stage.

Therefore, in order to obtain the height of the object, the corresponding-area detecting unit 47 detects the corresponding area that is in the disparity image and that corresponds to the isolated area. Furthermore, if it is divided into multiple isolated areas by the division processing unit 46, the corresponding-area detecting unit 47 conducts detection of the corresponding area with regard to each of the divided isolated areas.

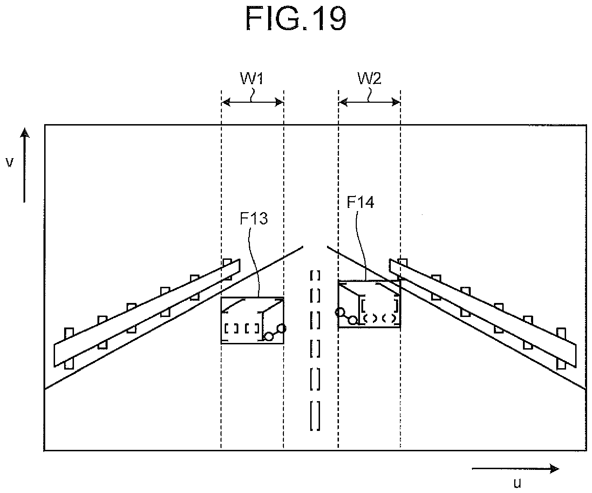

FIG. 19 is a diagram that illustrates an operation of the corresponding-area detecting unit 47, and it corresponds to the disparity image that is illustrated in FIG. 5. First, the corresponding-area detecting unit 47 conducts scanning in the direction of the axis v of the disparity image with regard to detection widths W1 and W2, for which the width of the isolated area on the second U map, i.e., the coordinates in the direction of the axis ru, correspond to the range from rumin to rumax. Next, the corresponding-area detecting unit 47 extracts, as a candidate pixel from the above-described detection widths, the pixel for which the height of the isolated area on the second U map, i.e., the coordinates in the direction of the axis d, has the value in the range from dmin to dmax as the disparity value d.

The corresponding-area detecting unit 47 determines that a line in the horizontal direction, in which there are equal to or more than a predetermined number of candidate pixels with regard to the detection widths W1 and W2, is an object candidate line among the group of candidate pixels that are extracted as described above. Next, the corresponding-area detecting unit 47 scans the disparity image in the direction of the axis V and, if there is a different object candidate line around the object candidate line of interest with equal to or more than a predetermined density, determines that the object candidate line of interest is an object line.

The corresponding-area detecting unit 47 searches for an object line with regard to each detection width that corresponds to each isolated area. Then, the corresponding-area detecting unit 47 determines that the circumscribed rectangles of the groups of object lines, detected for the isolated areas, are areas (object areas) F13 and F14 that correspond to the isolated areas and that are on the disparity image.

The object-type classifying unit 48 classifies the type (object type) of the object, presented on the object area, on the basis of the characteristics of the object area, detected by the corresponding-area detecting unit 47.

Specifically, the object-type classifying unit 48 uses the following Equation (1) to calculate the height Ho of the object, presented on the object area, from the height (yomax-yomin) of the object area. Here, "zo" is the distance between the object, which corresponds to the object area, and the subject vehicle, calculated from the minimum disparity value dmin within the object area. Furthermore, "f" is the focal length of the camera.

$$Ho = zo \times (yomax - yomin)/f \qquad (1)$$

Furthermore, the object-type classifying unit 48 uses the following Equation (2) to calculate the width Wo of the object, presented on the object area, from the width (xomax-xomin) of the object area.

$$Wo = zo \times (xomax - xomin)/f \qquad (2)$$

Furthermore, the object-type classifying unit 48 uses the following Equation (3) to calculate the depth Do of the object, presented on the object area, from the maximum disparity value dmax and the minimum disparity value dmin within the object area. Here, "offset" is the disparity value that is obtained when the object is captured at infinity.

$$Do = BF \times (1/(dmin - offset) - 1/(dmax - offset)) \qquad (3)$$

With regard to each object area (isolated area), the object-type classifying unit 48 classifies (specifies) the type of the object, presented on the area. Specifically, after acquiring the width Wo, the height Ho, and the depth Do of each object area as feature values, the object-type classifying unit 48 compares them with the prepared feature values of each object type so as to specify the appropriate object type. Here, the object types include, for example, pedestrian (child), pedestrian (adult), motorbike, bicycle, ordinary automobile, or large-sized automobile. These feature values (the width Wo, the height Ho, and the depth Do) of the object type are stored in, for example, the ROM 23 in the data format, such as a table (object type table).

The three-dimensional position determining unit 49 specifies the three-dimensional position of the object that corresponds to each object area, detected by the corresponding-area detecting unit 47. Here, the three-dimensional position means the position of presence in the real space. According to the present embodiment, the three-dimensional positions are a horizontal-direction position Xo and a height-direction position Yo relative to the camera 11.

Specifically, the three-dimensional position determining unit 49 acquires the image center coordinates (i_centerX, i_centerY) on the disparity image and the center coordinates (r_centerX, r_centerY) of each object area. Then, the three-dimensional position determining unit 49 uses the following Equation (4) and Equation (5) to calculate the horizontal-direction position Xo and the height-direction position Yo relative to the image capturing unit 10 (stereo camera). Here, "Z" is the distance (z=BF/(d-offset)) that is calculated from the disparity value d. Here, "BF" is the value that is obtained by multiplying the base length of the image capturing unit 10 by the focal length, and "offset" is the disparity value that is obtained when the object is captured at infinity. Furthermore, "f" is the focal length of the image capturing unit 10.

$$Xo = Z \times (r\_centerX - i\_centerX)/f \qquad (4)$$

$$Yo = Z \times (r\_centerY - i\_centerY)/f \qquad (5)$$

With regard to each object area, the image analyzing unit 20 outputs the combination of the object type and the three-dimensional position, acquired by the object-type classifying unit 48 and the three-dimensional position determining unit 49, to the vehicle control unit 30.

Then, the vehicle control unit 30 performs a collision avoidance control on the basis of the combination of the object type and the three-dimensional position, input from the image analyzing unit 20. For example, the vehicle control unit 30 informs a driver of the object type of an object and the positional relationship with the subject vehicle M via an undepicted display device or sound output device. Furthermore, if collision with an object is predicted, for example, the vehicle control unit 30 applies a brake to reduce the speed of the subject vehicle M.

As described above, according to the present embodiment, the isolated area, detected by the isolated-area detecting unit 45, is divided on the basis of the disparity frequency of each pixel that is included in the isolated area. Thus, the size of an object may be estimated more correctly, and the accuracy with which an object is detected may be improved. Furthermore, according to the present embodiment, the object type may be classified on the basis of the isolated area whose object size is correctly estimated; therefore, the accuracy with which the object type is classified may be improved.

Modified example 1

Next, an explanation is given of a modified example (modified example 1) of the above-described embodiment. In the above-described embodiment, an explanation is given of the configuration for generating the second U map by converting the horizontal axis of the first U map in a unit of the actual distance to detect an isolated area. However, it is known that, due to the conversion from the first U map to the second U map, the shape of the pixel area that represents an object is deformed. This deformation is significant especially at a long distance and at an edge of the angle of view.

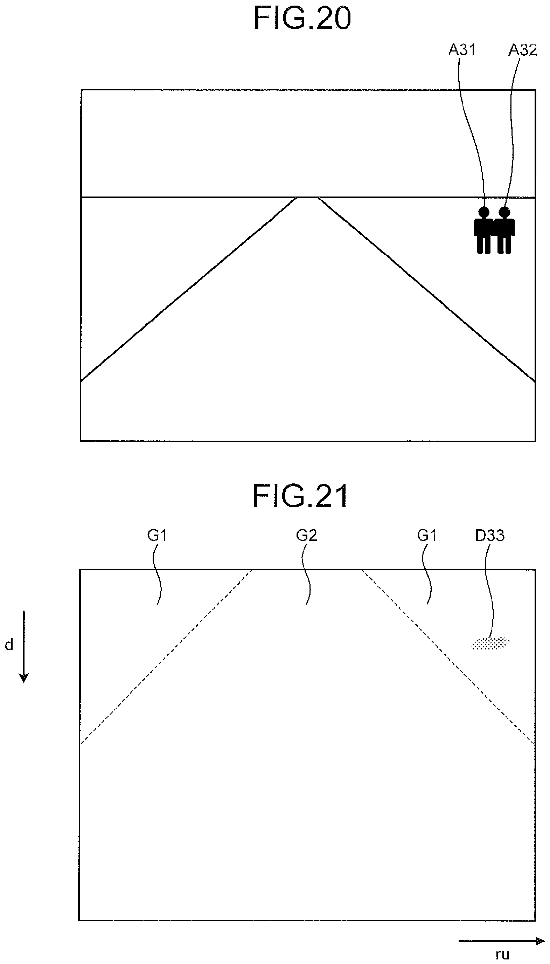

In a case where, for example, as in FIG. 20, persons A31 and A32, who are present at a long distance and at an edge of the angle of view, are captured, the second U map is generated on the basis of the reference image as in FIG. 21. Here, FIG. 20 is a diagram that schematically illustrates another example of the reference image. Furthermore, FIG. 21 is a diagram that schematically illustrates the second U map that corresponds to the reference image of FIG. 20. Here, the scene (place) illustrated in FIG. 20 is the same as that in FIG. 10.

In the situation of FIG. 20, the persons A31 and A32 are side-by-side and close to each other; therefore, the effective pixels that are on the second U map and that correspond to the persons A31 and A32 are represented as a single pixel group D33. Here, if the pixel group D23 (see FIG. 11), which is obtained from the reference image that captures the persons A21 and A22 who are present on the center of the road, is compared with the pixel group D33 of FIG. 21, it is understood that the shape of the pixel group D33 is tilted (deformed) as compared to the shape of the pixel group D23.

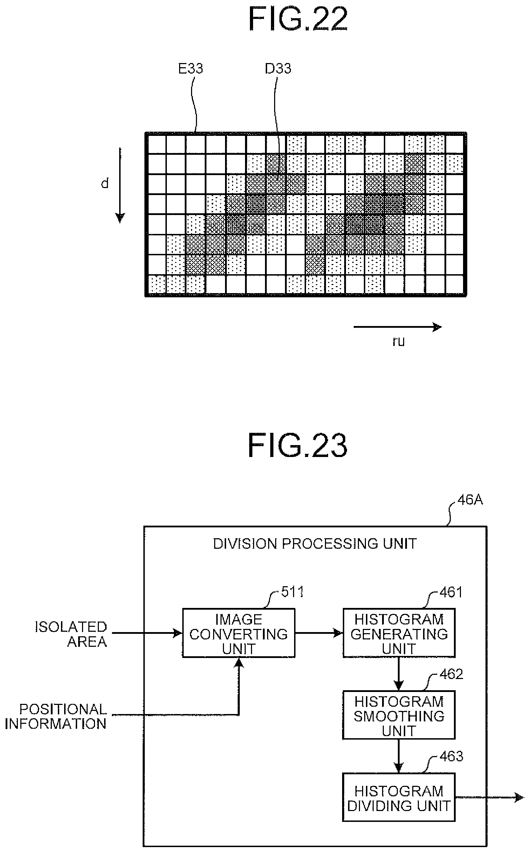

Furthermore, in the case of FIG. 21, the isolated-area detecting unit 45 groups the tilted pixel group D33 as a single pixel group and detects that the rectangular area that circumscribes the pixel group D33 is an isolated area E33, as illustrated in FIG. 22. Here, FIG. 22 is an enlarged view of the area of the pixel group D33 that is illustrated in FIG. 21, and it is indicated that, as the density of a pixel is higher, the disparity frequency is higher.

As described above, if the pixel group within an isolated area is deformed, the histogram that is generated by the histogram generating unit 461 is also affected. For example, if a histogram is generated for the isolated area E33 of FIG. 22, the histogram generating unit 461 conducts addition of the disparity frequency in the direction of the vertical axis of the isolated area E33, or the like. Here, the histogram generating unit 461 combines the disparity frequencies of the different objects in the neighborhood of the central part of the isolated area E33; therefore, the boundary between the objects is uncertain. There is a possibility that, in the histogram that is generated as described above, it is difficult to divide an isolated area for each individual object.

Therefore, in the modified example 1, an explanation is given of the configuration that makes it possible to easily divide an isolated area by correcting deformation that occurs in an isolated area (pixel group). A configuration of a division processing unit 46A according to the present modified example is explained below. The division processing unit 46A corresponds to the division processing unit 46 according to the above-described embodiment. Here, the same reference numeral is applied to the same configuration as that in the above-described embodiment, and its explanation is omitted.

FIG. 23 is a diagram that schematically illustrates a configuration of the division processing unit 46A according to the modified example 1. As illustrated in FIG. 23, the division processing unit 46A includes functional units, such as an image converting unit 511, the histogram generating unit 461, the histogram smoothing unit 462, and the histogram dividing unit 463.

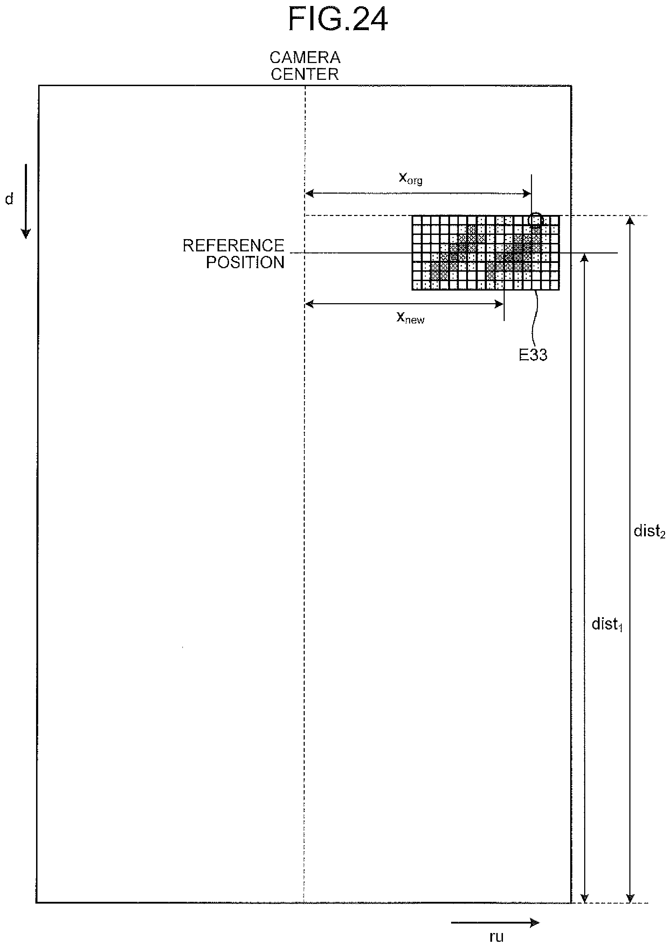

The image converting unit 511 receives input of the isolated areas that are detected by the isolated-area detecting unit 45 and the positional information (pixel location, coordinates, or the like) of each isolated area. Here, a configuration may be such that the positional information is input from the isolated-area detecting unit 45, or a configuration may be such that it is input from the CPU 21. With regard to each isolated area, the image converting unit 511 converts a pixel location within the isolated area and outputs the converted isolated area to the histogram generating unit 461. With reference to FIG. 24, an operation of the image converting unit 511 is explained below.

FIG. 24 is a diagram that illustrates an operation of the image converting unit 511. Here, FIG. 24 illustrates the second U map, where the horizontal axis corresponds to the location ru, and the vertical axis corresponds to the disparity value d. Furthermore, the isolated area that is illustrated in FIG. 24 corresponds to the isolated area E33 that is illustrated in FIG. 22. Moreover, the dashed line that runs at the center of the second U map in the direction of the vertical axis represents the camera position (camera center) of the image capturing unit 10.

First, in the isolated area E33, the image converting unit 511 sets the reference position (the disparity value d) that serves as a reference for a conversion operation. Here, the reference position is not particularly specified; however, as illustrated in FIG. 24, it is preferable to set the disparity value d that corresponds to the center position of the isolated area E33.

Next, the image converting unit 511 uses the following Equation (6) to convert a pixel location$_{Xorg}$ (unit: pixel) of each pixel, included in the isolated area E33, in the direction of the horizontal axis into a new pixel location$_{Xnew}$ (unit: pixel). Here, dist$_1$ is the distance (unit: mm) between the reference position and the image capturing unit 10 (the subject vehicle M). Furthermore, dist$_2$ is the distance (unit: mm) between the processing target pixel and the image capturing unit 10 (the subject vehicle M). Here, dist$_1$ and dist$_2$ may be distances on the second U map, or they may be the actual distance that is calculated from the disparity value d.

$$x_{new} = (dist_2/dist_1) \times x_{org} \qquad (6)$$

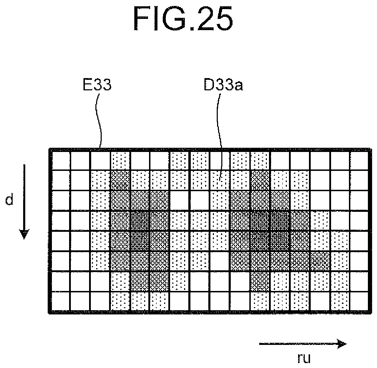

For example, as illustrated in FIG. 24, if the center of the isolated area E33 is the reference position, the pixel with the larger disparity value d than the reference position, i.e., the pixel that is under the reference position, is moved in the plus direction (to the right) of the horizontal axis in accordance with the above-described Equation (6). Furthermore, the pixel with the smaller disparity value d than the reference position, i.e., the pixel that is above the reference position, is moved in the minus direction (to the left) of the horizontal axis in accordance with the above-described Equation (6). As a result, the pixel group D33 (see FIG. 22), which is tilted within the isolated area E33, is converted into a pixel group D33a where the tilt has been corrected, as illustrated in FIG. 25.

As described above, with the division processing unit 46A according to the present modified example, even if an isolated area is detected at a long distance and at an edge of the angle of view, the shape of a pixel group, included in the isolated area, may be corrected; thus, the isolated area may be easily divided.

Furthermore, a configuration may be such that the image converting unit 511 entirely processes the isolated areas that are detected by the isolated-area detecting unit 45, or a configuration may be such that it selectively processes them. In the case of the latter configuration, the image converting unit 511 sets an isolated area that is present at the location where deformation occurs as a processing target on the basis of the positional information on the isolated area on the second U map. For example, the image converting unit 511 performs the above-described conversion operation on the isolated area that is present at an area G1, illustrated in FIG. 21, and outputs the isolated area, on which the conversion operation has been performed, to the histogram generating unit 461. Then, the image converting unit 511 removes the isolated area that is present at an area G2, illustrated in FIG. 21, from the processing target and outputs the isolated area to the histogram generating unit 461 without change. Thus, only the isolated area where deformation occurs may be set as a processing target, and the processing efficiency may be improved.

Modified example 2

In the above-described modified example 1, an explanation is given of the configuration such that the image converting unit 511 selects an isolated area that is a processing target and performs a conversion operation. In a modified example 2, an explanation is given of a configuration such that an independent functional unit, different from the image converting unit 511, selects an isolated area. The configuration of a division processing unit 46B according to the present modified example is explained below. The division processing unit 46B corresponds to the division processing unit 46 according to the above-described embodiment. Here, the same reference numerals are applied to the same components as those in the above-described embodiment and the modified example, and their explanations are omitted.

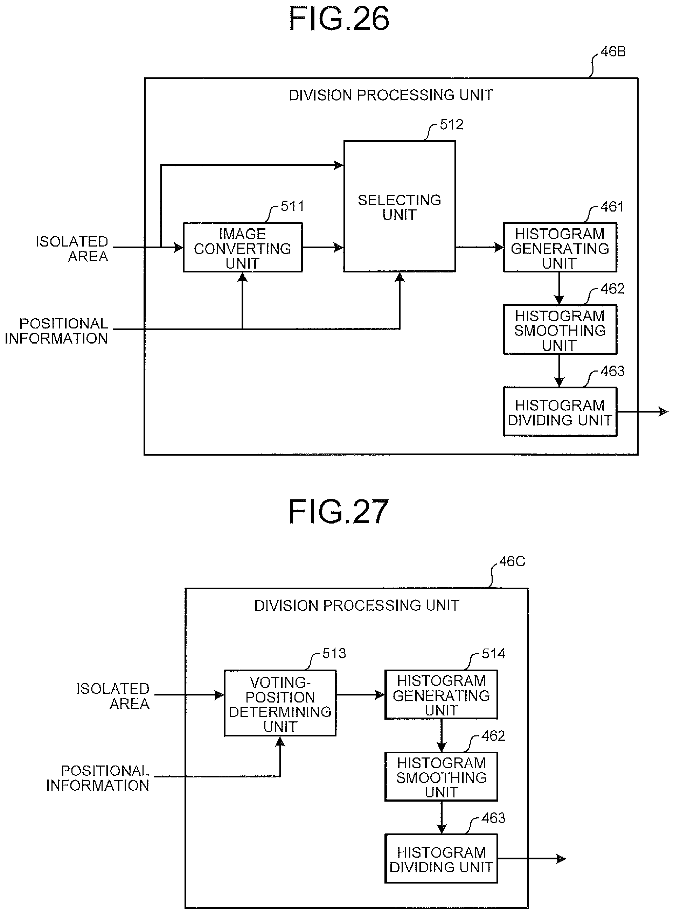

FIG. 26 is a diagram that schematically illustrates a configuration of the division processing unit 46B according to the modified example 2. As illustrated in FIG. 26, the division processing unit 46B includes functional units, such as the image converting unit 511, a selecting unit 512, the histogram generating unit 461, the histogram smoothing unit 462, and the histogram dividing unit 463. Here, the image converting unit 511 may or may not have the selection function that is explained in the modified example 1.

Here, the selecting unit 512 receives input of an isolated area that is detected by the isolated-area detecting unit 45, an isolated area that is converted by the image converting unit 511, and the positional information on each isolated area. The selecting unit 512 selects an isolated area, which is to be output to the histogram dividing unit 463, from the input isolated areas on the basis of the positional information on each isolated area. Specifically, the selecting unit 512 selects the isolated area that is converted by the image converting unit 511 with respect to the isolated area that is the area where deformation occurs, and it selects the isolated area that is detected by the isolated-area detecting unit 45 with respect to the isolated area that is the area where deformation does not occur. Furthermore, for example, the areas G1 and G2, illustrated in FIG. 21, may be used as the area that serves as a reference for selection.

As described above, with the division processing unit 46B according to the present modified example, even if an isolated area is detected at a long distance and at an edge of the angle of view, the shape of a pixel group, included in the isolated area, may be corrected; thus, the isolated area may be easily divided in the same manner as in the modified example 1.

Modified example 3

In the above-described modified examples 1 and 2, an explanation is given of the configuration in which a conversion operation is performed on an isolated area by the image converting unit 511 and then a histogram is generated on the basis of the isolated area on which the conversion operation has been performed. In a modified example 3, an explanation is given of a configuration where a histogram is generated without using the image converting unit 511. A configuration of a division processing unit 46C according to the present modified example is explained below. The division processing unit 46C corresponds to the division processing unit 46 according to the above-described embodiment, Here, the same reference numerals are applied to the same components as those in the above-described embodiment and the modified example, and their explanations are omitted.

FIG. 27 is a diagram that schematically illustrates a configuration of the division processing unit 46C according to the modified example 3. As illustrated in FIG. 27, the division processing unit 46C includes functional units, such as a voting-position determining unit 513, a histogram generating unit 514, the histogram smoothing unit 462, and the histogram dividing unit 463.

The voting-position determining unit 513 receives input of isolated areas that are detected by the isolated-area detecting unit 45 and the positional information on each isolated area. With regard to each isolated area, the voting-position determining unit 513 determines the voting position of each pixel (effective pixel) that is present in the isolated area. Here, the voting position specifies the position of the bin in the histogram in accordance with the disparity frequency of the effective pixel, i.e., the position of the abscissa on the second U map. Here, the voting-position determining unit 513 determines that the pixel location$_{Xnew}$, which is calculated in accordance with the above-described Equation (6), is the voting position.

Furthermore, with regard to each isolated area, the voting-position determining unit 513 relates the disparity frequency of an effective pixel and the voting position of the effective pixel and outputs them to the histogram generating unit 514.

The histogram generating unit 514 generates a histogram for each isolated area on the basis of the disparity frequency and the voting position of the effective pixel, input from the voting-position determining unit 513. Here, the result where the deformation, which occurs in an isolated area, has been corrected is applied to the histogram that is generated by the histogram generating unit 514. Therefore, the histogram dividing unit 463 may easily divide an isolated area by using the histogram that is generated by the histogram generating unit 514.

As described above, with the division processing unit 46C according to the present modified example, even if an isolated area is detected at a long distance and at an edge of the angle of view, it is possible to generate a histogram to which a post-correction result is applied; thus, an isolated area may be easily divided in the same manner as in the above-described modified example.

In the above-described embodiment, for example, an explanation is given of the embodiment where a stereo camera is used as the image capturing unit 10; however, this is not a limitation. For example, a configuration may be such that, as the image capturing unit 10, a monocular distance-image camera is used, which is capable of acquiring image data (distance image) that includes the distance information indicating the distance (depth) from the object on a pixel by pixel basis. Moreover, a configuration may be such that distance images may be acquired by using the combination of a distance measuring unit, such as a laser, and a commonly used monocular camera. If such a configuration is used, the distance from the object is proportional to the reciprocal of the disparity value d; therefore, the disparity image, the first U map, the second U map, or the like, may be generated on the basis of the distance image.

Furthermore, in the above-described embodiment, an explanation is given by using the image of the histogram as the disparity-frequency distribution information; however, it is illustrated as an example for easy explanation. If the image analyzing unit 20 divides an isolated area, the histogram generating unit 461 does not need to actually generate a histogram as an image. For example, the histogram generating unit 461 may generate the numerical information that indicates the histogram, for example, as the disparity-frequency distribution information.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

**Claims**

1. An object detection device comprising:

   an image capturing unit (10) configured to capture image data for generating an image that includes disparity information or distance information on a pixel basis;
   a first generator (43) configured to generate a first map which is a U-disparity map in which a pixel location of the image in a direction of one axis, a disparity value at the pixel location, and a disparity frequency at which the disparity value appears are associated with one another;
   a second generator (44) configured to generate a second map obtained by converting the axis of a pixel location on the first map from a unit of pixel into a unit of an actual distance;
   a detector (45) configured to detect an area of a group of connected pixels that have a disparity frequency equal to or more than a predetermined value on the second map as an isolated area where an object is present;
   a divider (46) configured to divide the isolated area based on a disparity frequency of each pixel that is included in the isolated area; and
   a third generator (514) configured to generate a histogram of disparity frequencies based on a disparity frequency of each pixel that is included in the isolated area of the second map, wherein a tilt that occurs in the isolated area has been corrected by calculating $x_{new} = (dist_2/dist_1) \times x_{org}$ by a voting-position determining unit (513), wherein $x_{org}$ defines a pixel location in a direction of a horizontal axis in the isolated area, $dist_1$ defines a distance between a reference position and the image capturing unit (10), $dist_2$ defines a distance between a processing target pixel and the image capturing unit (10), and $x_{new}$ defines a new pixel location, and wherein the object detection device comprises said voting-position determining unit (513) configured to determine a voting position for each pixel in the isolated area, wherein the voting position is defined to be $x_{new}$ calculated for the respective pixel and specifies the position of the bin in the histogram of disparity frequencies in accordance with the disparity frequency of the respective pixel,
   and wherein
   the third generator (S14) is configured to generate the histogram of disparity frequencies on the basis of the disparity frequency and the voting position of each pixel in the isolated area,
   and wherein the divider (46) is configured to divide the isolated area based on the histogram of disparity frequencies.

2. An object detection method comprising:

   generating an image that includes disparity information or distance information on a pixel basis, based on image data captured by an image capturing unit;
   generating a first map which is a U-disparity map in which a pixel location of the image in a direction of one axis, a disparity value at the pixel location, and a disparity frequency at which the disparity value appears are associated with one another;

generating a second map obtained by converting the axis of a pixel location on the first map from a unit of pixel into a unit of an actual distance;

detecting an area of a group of connected pixels that have a disparity frequency equal to or more than a predetermined value on the second map as an isolated area where an object is present;

dividing the isolated area based on a disparity frequency of each pixel that is included in the isolated area;

generating a histogram of disparity frequencies based on a disparity frequency of each pixel that is included in the isolated area of the second map wherein a tilt that occurs in the isolated area has been corrected by calculating $x_{new} = (dist_2/dist_1) \times x_{org}$ for determining a voting position, wherein $x_{org}$ defines a pixel location in a direction of a horizontal axis in the isolated area, $dist_1$ defines a distance between a reference position and the image capturing unit, $dist_2$ defines a distance between a processing target pixel and the image capturing unit, and $x_{new}$ defines a new pixel location, wherein for said

determining a voting position for each pixel in the isolated area, the voting position is defined to be $x_{new}$ calculated for the respective pixel and specifies the position of the bin in the histogram of disparity frequencies in accordance with the disparity frequency of the respective pixel,

and wherein

the histogram of disparity frequencies is generated on the basis of the disparity frequency and the voting position of each pixel in the isolated area,

and wherein said dividing divides the isolated area based on the histogram of disparity frequencies.

3. A computer program that, when executed on a computer, causes the computer to execute the method according to the preceding claim.

**Patentansprüche**

1. Obj ektdetektionsvorrichtung, die Folgendes umfasst:

eine Bildaufnahmeeinheit (10), die konfiguriert ist, Bilddaten zum Erzeugen eines Bildes aufzunehmen, die Disparitätsinformationen oder Abstandsinformationen auf einer Pixelbasis enthalten;

einen ersten Generator (43), der konfiguriert ist, eine erste Karte zu erzeugen, die eine U-Disparitätskarte ist, in der ein Pixelort des Bildes in Richtung einer Achse, ein Disparitätswert an dem Pixelort und eine Disparitätshäufigkeit, mit der der Disparitätswert erscheint, einander zugeordnet sind;

einen zweiten Generator (44), der konfiguriert ist, eine zweite Karte zu erzeugen, die durch Umsetzen der Achse eines Pixelorts auf der ersten Karte von einer Pixeleinheit in eine Einheit eines tatsächlichen Abstands erhalten wird;

einen Detektor (45), der konfiguriert ist, einen Bereich einer Gruppe verbundener Pixel, die eine Disparitätshäufigkeit besitzen, die gleich einem vorbestimmten Wert oder größer als dieser ist, auf der zweiten Karte als einen isolierten Bereich, wo ein Objekt vorhanden ist, zu detektieren;

eine Teileinrichtung (46), die konfiguriert ist, den isolierten Bereich anhand einer Disparitätshäufigkeit jedes Pixels, das in dem isolierten Bereich enthalten ist, zu unterteilen; und

einen dritten Generator (514), der konfiguriert ist, ein Histogramm von Disparitätshäufigkeiten anhand einer Disparitätshäufigkeit jedes Pixels, das in dem isolierten Bereich der zweiten Karte enthalten ist, zu erzeugen, wobei eine Neigung, die in dem isolierten Bereich auftritt, durch Berechnen von $x_{new} = (dist_2/dist_1) \times x_{org}$ durch eine Abstimmungspositionsbestimmungseinheit (513) korrigiert wurde,

wobei $x_{org}$ einen Pixelort in Richtung einer horizontalen Achse in dem isolierten Bereich definiert, $dist_1$ einen Abstand zwischen einer Referenzposition und der Bildaufnahmeeinheit (10) definiert, $dist_2$ einen Abstand zwischen einem Verarbeitungszielpixel und der Bildaufnahmeeinheit (10) definiert und $x_{new}$ einen neuen Pixelort definiert, und wobei

die Objektdetektionsvorrichtung die Abstimmungspositionsbestimmungseinheit (513) umfasst, die konfiguriert ist, eine Abstimmungsposition für jedes Pixel in dem isolierten Bereich zu bestimmen, wobei die Abstimmungsposition als $x_{new}$, das für das jeweilige Pixel berechnet wurde, definiert ist und die Position der Klasse in dem Histogramm von Disparitätshäufigkeiten in Übereinstimmung mit der Disparitätshäufigkeit des jeweiligen Pixels spezifiziert,

und wobei der dritte Generator (S14) konfiguriert ist, das Histogramm der Disparitätshäufigkeiten anhand der Disparitätshäufigkeit und der Abstimmungsposition jedes Pixels in dem isolierten Bereich zu erzeugen,

und wobei die Teileinrichtung (46) konfiguriert ist, den isolierten Bereich anhand des Histogramms von Disparitätshäufigkeiten zu unterteilen.

2. Objektbestimmungsverfahren, das Folgendes umfasst:

Erzeugen eines Bildes, das Disparitätsinformationen oder Abstandsinformationen auf einer Pixelbasis enthält, anhand von durch eine Bildaufnahmeeinheit aufgenommenen Bilddaten;

Erzeugen einer ersten Karte, die eine U-Disparitätskarte ist, in der ein Pixelort des Bildes in Richtung einer Achse, ein Disparitätswert an dem Pixel ort und eine Disparitätshäufigkeit, mit der der Disparitätswert erscheint, einander zugeordnet sind;

Erzeugen einer zweiten Karte, die durch Umsetzen der Achse eines Pixelorts auf der ersten Karte von einer Pixeleinheit in eine Einheit eines tatsächlichen Abstands erhalten wird;

Detektieren eines Bereichs einer Gruppe verbundener Pixel, die eine Disparitätshäufigkeit besitzen, die gleich einem vorbestimmten Wert oder größer als dieser ist, auf der zweiten Karte als einen isolierten Bereich, wo ein Objekt vorhanden ist;

Unterteilen des isolierten Bereichs anhand einer Disparitätshäufigkeit jedes Pixels, das in dem isolierten Bereich enthalten ist;

Erzeugen eines Histogramms von Disparitätshäufigkeiten anhand einer Disparitätshäufigkeit jedes Pixels, das in dem isolierten Bereich der zweiten Karte enthalten ist, wobei eine Neigung, die in dem isolierten Bereich auftritt, durch Berechnen von $x_{new} = (dist_2/dist_1) \times x_{org}$ zum Bestimmen einer Abstimmungsposition korrigiert wurde,

wobei $x_{org}$ einen Pixelort in Richtung einer horizontalen Achse in dem isolierten Bereich definiert, $dist_1$ einen Abstand zwischen einer Referenzposition und der Bildaufnahmeeinheit definiert, $dist_2$ einen Abstand zwischen einem Verarbeitungszielpixel und der Bildaufnahmeeinheit definiert und $x_{new}$ einen neuen Pixelort definiert, wobei für das

Bestimmen einer Abstimmungsposition für jedes Pixels in dem isolierten Bereich die Abstimmungsposition als $x_{new}$, das für das jeweilige Pixel berechnet wurde, definiert ist und die Position der Klasse in dem Histogramm von Disparitätshäufigkeiten in Übereinstimmung mit der Disparitätshäufigkeit des jeweiligen Pixels spezifiziert, und wobei das Histogramm der Disparitätshäufigkeiten anhand der Disparitätshäufigkeit und der Abstimmungsposition jedes Pixels in dem isolierten Bereich erzeugt wird,

und wobei das Unterteilen den isolierten Bereich anhand des Histogramms von Disparitätshäufigkeiten unterteilt.

3. Computerprogramm, das dann, wenn es auf einem Computer ausgeführt wird, bewirkt, dass der Computer das Verfahren nach dem vorhergehenden Anspruch ausführt.

## Revendications

1. Dispositif de détection d'objet, comprenant :

une unité de capture d'image (10) configurée pour capturer des données d'image pour générer une image qui inclut des informations de disparité ou des informations de distance en ce qui concerne chaque pixel ;

un premier générateur (43) configuré pour générer une première carte qui est une carte de disparité U dans laquelle un emplacement de pixel de l'image dans une direction d'un axe, une valeur de disparité à l'emplacement de pixel, et une fréquence de disparité à laquelle la valeur de disparité apparaît sont associés les uns aux autres ;

un deuxième générateur (44) configuré pour générer une seconde carte obtenue en convertissant l'axe d'un emplacement de pixel sur la première carte à partir d'une unité de pixel en une unité d'une distance réelle ;

un détecteur (45) configuré pour détecter une zone d'un groupe de pixels connectés qui ont une fréquence de disparité égale ou supérieure à une valeur prédéterminée sur la seconde carte en tant que zone isolée où un objet est présent ;

un diviseur (46) configuré pour diviser la zone isolée sur la base d'une fréquence de disparité de chaque pixel qui est inclus dans la zone isolée ; et

un troisième générateur (514) configuré pour générer un histogramme de fréquences de disparité sur la base d'une fréquence de disparité de chaque pixel qui est inclus dans la zone isolée de la seconde carte, dans lequel une inclinaison qui survient dans la zone isolée a été corrigée en calculant $x_{new} = (dist_2/dist_1) \times x_{org}$, par une unité de détermination de position de vote (513),

dans lequel $x_{org}$ définit un emplacement de pixel dans une direction d'un axe horizontal dans la zone isolée, $dist_1$ définit une distance entre une position de référence et l'unité de capture d'image (10), $dist_2$ définit une distance entre un pixel cible de traitement et l'unité de capture d'image (10), et $x_{new}$ définit un nouvel emplacement de pixel, et dans lequel

le dispositif de détection d'objet comprend ladite unité de détermination de position de vote (513) configurée pour déterminer une position de vote pour chaque pixel dans la zone isolée, dans lequel la position de vote est définie comme étant $x_{new}$ calculée pour le pixel respectif et spécifie la position du compartiment dans l'histogramme de fréquences de disparité conformément à la fréquence de disparité du pixel respectif, et dans lequel le troisième générateur (S14) est configuré pour générer l'histogramme de fréquences de disparité sur la base de la fréquence de disparité et de la position de vote de chaque pixel dans la zone isolée, et dans lequel le diviseur (46) est configuré pour diviser la zone isolée sur la base de l'histogramme de fréquences de disparité.

2.  Procédé de détection d'objet, comprenant :

la génération d'une image qui inclut des informations de disparité ou des informations de distance en ce qui concerne chaque pixel, sur la base de données d'image capturées par une unité de capture d'image ;

la génération d'une première carte qui est une carte de disparité U dans laquelle un emplacement de pixel de l'image dans une direction d'un axe, une valeur de disparité à l'emplacement de pixel, et une fréquence de disparité à laquelle la valeur de disparité apparaît sont associés les uns aux autres ;

la génération d'une seconde carte obtenue en convertissant l'axe d'un emplacement de pixel sur la première carte à partir d'une unité de pixel en une unité d'une distance réelle ;

la détection d'une zone d'un groupe de pixels connectés qui ont une fréquence de disparité égale ou supérieure à une valeur prédéterminée sur la seconde carte en tant que zone isolée où un objet est présent ;

la division de la zone isolée sur la base d'une fréquence de disparité de chaque pixel qui est inclus dans la zone isolée ;

la génération d'un histogramme de fréquences de disparité sur la base d'une fréquence de disparité de chaque pixel qui est inclus dans la zone isolée de la seconde carte, dans lequel une inclinaison qui survient dans la zone isolée a été corrigée en calculant $x_{new} = (dist_2/dist_1) \times x_{org}$ pour la détermination d'une position de vote, dans lequel $x_{org}$ définit un emplacement de pixel dans une direction d'un axe horizontal dans la zone isolée, $dist_1$ définit une distance entre une position de référence et l'unité de capture d'image, $dist_2$ définit une distance entre un pixel cible de traitement et l'unité de capture d'image, et $x_{new}$ définit un nouvel emplacement de pixel, dans lequel pour ladite détermination d'une position de vote pour chaque pixel dans la zone isolée, la position de vote est définie comme étant $x_{new}$ calculée pour le pixel respectif et spécifie la position du compartiment dans l'histogramme de fréquences de disparité conformément à la fréquence de disparité du pixel respectif, et dans lequel

l'histogramme de fréquences de disparité est généré sur la base de la fréquence de disparité et de la position de vote de chaque pixel dans la zone isolée, et dans lequel ladite division divise la zone isolée sur la base de l'histogramme de fréquences de disparité.

3.  Programme d'ordinateur qui, lorsqu'il est exécuté sur un ordinateur, fait en sorte que l'ordinateur exécute le procédé selon la revendication précédente.

# FIG.1

# FIG.2

# FIG.3

# FIG.4

# FIG.5

# FIG.6

# FIG.7

# FIG.8

# FIG.9

# FIG.10

A21    A22

# FIG.11

D23

d

ru

# FIG.12

E23    D23

d

ru

# FIG.13

46

DIVISION PROCESSING UNIT

ISOLATED
AREA

461
HISTOGRAM
GENERATING
UNIT

462
HISTOGRAM
SMOOTHING
UNIT

463
HISTOGRAM
DIVIDING UNIT

# FIG.14

```
        ┌─────────────┐
        │    START    │
        └──────┬──────┘
               │          S11
        ┌──────▼──────────────┐
        │ HISTOGRAM GENERATION │
        └──────┬──────────────┘
               │          S12
        ┌──────▼──────┐
        │  SMOOTHING  │
        └──────┬──────┘
               │          S13
        ┌──────▼──────────────┐
        │  HISTOGRAM DIVISION  │
        │      PROCESS         │
        └──────┬──────────────┘
               │          S14
        ┌──────▼──────────────┐
        │ ISOLATED-AREA DIVISION │
        └──────┬──────────────┘
               │
        ┌──────▼──────┐
        │     END     │
        └─────────────┘
```

# FIG.15

# FIG.16

HISTOGRAM DIVISION
PROCESS

S21
INITIALIZE MAX AND TH1

S22
SET FIRST BIN AS PROCESSING
TARGET

S23
DOES
DISPARITY FREQUENCY
EXCEED MAX? — NO

YES

S24
UPDATE MAX AND TH1

S26
DOES
DISPARITY FREQUENCY
EXCEED TH1? — NO

YES

S27
IS DISPARITY
FREQUENCY
SMALLEST? — NO

YES

S28
ASSIGN LABEL NUMBER

S29
INCREMENT LABEL NUMBER

S30
INITIALIZE MAX AND TH1

S25
ASSIGN LABEL NUMBER

S31
HAS LAST BIN BEEN
PROCESSED? — NO

S32
SET NEXT BIN AS
PROCESSING
TARGET

YES

S33
DOES
MAXIMUM VALUE OF FINALLY
DETECTED MOUNTAIN
EXCEED
TH2? — NO

S34
DECREMENT ASSIGNED LABEL
NUMBER

YES

RETURN

26

# FIG.17

# FIG.18

# FIG.19

# FIG.20

A31    A32

# FIG.21

G1        G2        G1    D33

d

ru

# FIG.22

E33    D33

d

ru

# FIG.23

46A

DIVISION PROCESSING UNIT

ISOLATED AREA → 511 IMAGE CONVERTING UNIT → 461 HISTOGRAM GENERATING UNIT

POSITIONAL INFORMATION →

462 HISTOGRAM SMOOTHING UNIT

463 HISTOGRAM DIVIDING UNIT →

# FIG.24

CAMERA CENTER

REFERENCE POSITION

$x_{org}$

$x_{new}$

E33

d

$dist_2$

$dist_1$

ru

# FIG.25

# FIG.26

DIVISION PROCESSING UNIT ⌐46B

ISOLATED AREA →

POSITIONAL INFORMATION →

IMAGE CONVERTING UNIT ⌐511

SELECTING UNIT ⌐512

HISTOGRAM GENERATING UNIT ⌐461

HISTOGRAM SMOOTHING UNIT ⌐462

HISTOGRAM DIVIDING UNIT ⌐463

# FIG.27

DIVISION PROCESSING UNIT ⌐46C

ISOLATED AREA →

POSITIONAL INFORMATION →

VOTING-POSITION DETERMINING UNIT ⌐513

HISTOGRAM GENERATING UNIT ⌐514

HISTOGRAM SMOOTHING UNIT ⌐462

HISTOGRAM DIVIDING UNIT ⌐463

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014096005 A

**Non-patent literature cited in the description**

- **BENJAMIN KORMANN et al.** STEREO VISION BASED VEHICLE DETECTION. *VISIGRAPP 2010: International Joint Conference on Computer Vision, Imaging and Computer Graphics Theory and Applications,* 17 May 2010, 431-438, http://ar.in.tum.de/pub/korann2010visigrapp/kormann 2010visigrapp.pdf

- Vehicle Surround Capture: Survey of Techniques and a Novel Omni-Video-Based Approach for Dynamic Panoramic Surround Maps. **TARAK GANDHI et al.** IEEE TRANSACTIONS ON INTELLIGENT TRANSPORTATION SYSTEMS. IEEE, 01 September 2006, vol. 7, 293-308

- Principal Axis-Based Correspondence between Multiple Camera for People Tracking. **WEIMING HU et al.** IEEE TRANSACTIONS ON PATTERN ANALYSIS AND MACHINE INTELLIGENCE. IEEE COMPUTER SOCIETY, 01 April 2006, vol. 28, 663-671